# EUROPEAN PATENT APPLICATION

(11) **EP 4 079 603 A1**
(43) Date of publication of application: **26.10.2022**
(21) Application number: 22460009.8
(22) Date of filing: 16.02.2022
(51) Int. Cl.: B62B 9/20, B62B 5/06

(54) **ADJUSTABLE STROLLER HANDLE**

(30) Priority: 19.04.2021 PL 13000321 U
(71) Applicant: Przedsiebiorstwo Produkcyjno - Handlowe "ARO" KARON Spolka Jawna, 42-200 Czestochowa (PL)
(72) Inventor: Karon, Janusz, 42-200 Czestochowa (PL)
(74) Representative: Korbela, Anna

(57) **Abstract**

An adjustable stroller handle consists essentially of a "U" shaped grip (1). An inner profile (3) is rigidly fixed to each leg of the grip (1) protruding downwards, on which an outer profile (4) is slid. To enable simultaneous adjustment of the length of the stroller handle and change of the angle of inclination of the grip (1) in horizontal plane, the grip (1) is fitted with a gear adjustment mechanism (2), and the inner profile (3) which is rigidly joined with it is slidingly set in the outer profile (4). The adjustment of the stroller handle is effected in two planes - in vertical plane by changing the position in height of the handle (change in length of the handle), and in horizontal plane by the gear adjustment mechanism (2). So, the adjustment includes the combination of the mechanisms of the telescopic handle and of the folded handle, ensuring the possibility to push the stroller in the most convenient and ergonomic way, considering different height and posture of individual users.

## Description

The object of the developed utility model is the adjustable stroller handle which may be applied in different types of carts, as shop carts, warehouse carts, and - first of all - in prams and push-chairs which are permanently in motion and where the user keeps the handle in order to push and to maneuver it.

The strollers presently available on the market (but also the kids' bikes) come with a number of different types of handles and grips which the user keeps in hand to push and handle the stroller, as:
- well-known transverse-type grips,
- popular single umbrella-type grips (with rotary adjustment - these are seats where the handle is joint with the seat and may be turned against the seat by 180° angle so that the child faces the person pushing the chair or faces backward),
- however, there are still strollers with no handle adjustment,
- and many of them allows for one-directional adjustment only, be it inclination - forwards/backwards, or rotary adjustment, as in the case of umbrella-type handles,
- in models provided with multidirectional handle adjustment, the adjustment is usually done by using different sequences of actions for each of the directions of adjustment,
- present on the marketplace are also bars for pushing with grips, or grips only, supplied with other products for kids, so that the user (most often the parent) could push the kid sitting in the stroller; one of the examples being the grip on a push-bar which is extended from the rear of the kids' tricycle; the grip or handle of this type of products are usually immovable, with no position adjustment.

The majority of the strollers is designed to provide the kid a comfortable environment when resting in it, they however often fail to consider the parents' ergonomics. Therefore persons of sub- or over-standard gauge oftenly cannot place their arms in the optimum position against the handle of the stroller frame; that results in significantly lower comfort of using the device.

The solutions known currently do not fully solve the problem referred to.

For instance, from the description of the invention published as GB2149359A (with priority date of 04-11-1983), the solution is known entitled *"Handcart handle height adjusting mechanism".* According to this invention, the handcart handle comprises an upper rod portion having a grip, and a lower rod portion, for vertically slidably supporting the upper rod portion. Either upper rod portion or lower rod portion forms a sleeve, while the other forms an insert adapted to be received in the opening in said sleeve.

Further, in the description of a German invention published as DE4022394A1 (with priority date of 13-07-1990) the solution is contained entitled "Handle for baby's push chair or perambulator" ("*Schieberstange fuer ein kinderwagengestell").* It contains a push-bar for the frame of a baby's push chair thanks to which the persons of different body sizes can find the optimum arms' position on the handle of push chair frame. The invention provides for two elements for each part of the handle which are mutually adjustable in length and may be - mechanically - permanently connected with each other. Such design makes it possible to change and fix the length of the sliding rod according to the need; it prevents early arm fatigue of the person pushing the push chair.

From another description of the invention published as US5625923A (with priority date of 28-12-1995) a solution is known entitled *"Stroller length-adjustable handle".* The solution provides for the length-adjustable handle structure for a stroller comprising an outer tube, a stationary block affixed to an upper end of the outer tube and an inner tube extending through the stationary block and slidably received within the outer tube. Moreover, the inner tube has a plurality of first holes defined therein along a length thereof enabling suitable accomodating inside the tube of the engaging block to immobilize the inner tube with respect to the outer tube. The engaging block can be released from one of the plurality of holes of the inner tube by finger pressure, so that the inner tube can be moved to a second position, thus changing the length of the handle.

From another description of the invention published as GB2331479A (with priority date of 15-06-1998) a solution is known entitled *"Adjustable handle for pushchairs".* The inventors presented the adjustable handle for pushchairs actuated by controlled - bigger or smaller - inclination of the handle in one plane. The adjusting is possible as the handle is transversally articulated at the top end of each of the stems of the handlebars. The handle is composed of two parts - one forms the grip and is coupled at its base, allowing for its rotation around its long axis, to the other part forming the articulated support situated at the upper end of each of the stems comprising the handlebar.

From another description of the invention published as US2005167936A1 (with priority date of 29-01-2004) solution is known entitled *"Adjustable, bi-directional, removable baby stroller handle".* The invention presents the design of a collapsible stroller comprising a handle which is telescopically adjusted and placed well away from the baby, to ensure comfort for a user of any stature. The adjustment is done vertically and not along the frame, thus allowing to keep the distance between the user and the baby, moreover - the dismounting of the grips is easy.

Next, from the description of the invention published as EP2000388A1 (with priority date of 21-01-2005 - US64504705P), the solution is known entitled *"Stroller with a handle that is telescopic and rotational movable".* In the solution the umbrella-type handles are provided for, to be grasped with one hand by the user. Each handle has an actuator to allow the user to adjust the handle in more than one direction, mode, plane or axis of its movement. In this solution, by pushing the push button, the user may turn the handle, eject or hide it lengthwise along its axis. Adjustment of the rotative position of the handle is done jointly with the length adjustment, or separately.

Another description of the invention published as EP2202128A2 (with priority date of 26-12-2008) presents the solution entitled *"Handle height adjusting mechanism for a stroller".* A stroller is presented, with a frame tube, handle tube, and the handle height adjusting mechanism. By joining the adjusting mechanism with the selected position bore in the frame tube, the handle tube may be locked on the chosen height against the frame tube.

From the description of a Polish invention P.420133 (with the priority date of 09-01-2017) a solution is known entitled "Mechanizm sktadania raczki wózka" *("Mechanism of folding of the handle of a cart"*). The solution presents the mechanism of folding of the handle of a cart - especially kids' stroller - enabling the desired bending, folding and easy adjustment of the handle length to the user's need, enabling easy packing and transportation of the cart. The solution allows to make a full rotation (360°) of the pivotable part of the cart handle, as the handle may be pivoted by 180° up and down from its basic straight position. Thus the total possible handle rotation is 360° around the axis set by the folding mechanism, i.e. the place of handle bending after the release of the lock.

Eventually, from the description of the invention published as US5845917A (with priority date of 06-11-1996) a solution is known entitled *"Telessopic handle for a stroller".* In this solution a telescopic handle for a stroller is presented. It has a "U"-shaped grip, a pair of inner tubes rigidly fixed within said handle and a pair of outer tubes each securely connected with said grip. The handle also has a pair of middle tubes fitted with special holes; each of the middle tubes is movably set in the innertubes. Within the through-hole of each outer tube a controlling device is received, for determining which of the holes of the middle tube shall be selected, and accordingly lengthen it or shorten it.

The objective of the solution is to provide a simple in design and easy in use handle for a cart, with adjustment of length and angle of inclination of the handle against the ground, ensuring the possibility to push the cart in the most convenient and ergonomic way, with a grip suitable for the posture of any person pushing the cart, regardless of her height or body size.

The adjustable stroller handle consists of a "U"-shaped grip having at both parts being the extensions of the grip legs, i.e. "U" arms - aiming in the direction of the ground - rigidly fixed inner profiles, each slidingly set inside the outer profile of the stroller.

The gist of the adjustable handle is that the grip has on both legs -"U" arms - a projection being the gear adjusting mechanism.
On the other side of these projections - gear adjusting mechanisms - in the parts being the extensions of the grip legs, i.e. "U" arms directed towards the ground, on both sides, likely in each case, there is:
- an inner profile with minor cross-section area which is inserted into the outer profile with the cross-section bigger than that of the inner profile.

Advantageously, the grip of the adjustable stroller handle (being the object of this utility model) is trimmed with the anti-slip fabric - rubber or ecoskin.

The solution as per this utility model allows for adjustment of the stroller handle in two planes, i.e. by changing the position of the height of the handle - in vertical plane, by its inserting or pulling out into/from the construction profile set inside the outer profile, prepared for this purpose, and by changing the position in height of the handle using the gear adjusting mechanism. Therefore, the proposed handle adjustment includes the combination of two mechanisms: telescopic handle and folded handle.

Such solution allows for free choice of the position of the setting of the stroller handle, as it can be freely extended vertically thus assuring the desired length while the grip may be set at adequate angle in horizontal plane. Therefore, the solution as per this utility model is universal, destined for numerous types of carts, especially kids' push-chairs, and allows free and convenient positioning of the stroller handle adequately to the height and posture of the user.

This design allows for the useful change of the angle of inclination and of the length of the stroller handle according to the actual need so that persons of different height may adopt optimal position - with hands extended against the grip - which prevents early arms fatigue of the pusher.

The present utility model is presented in more details on the drawings:

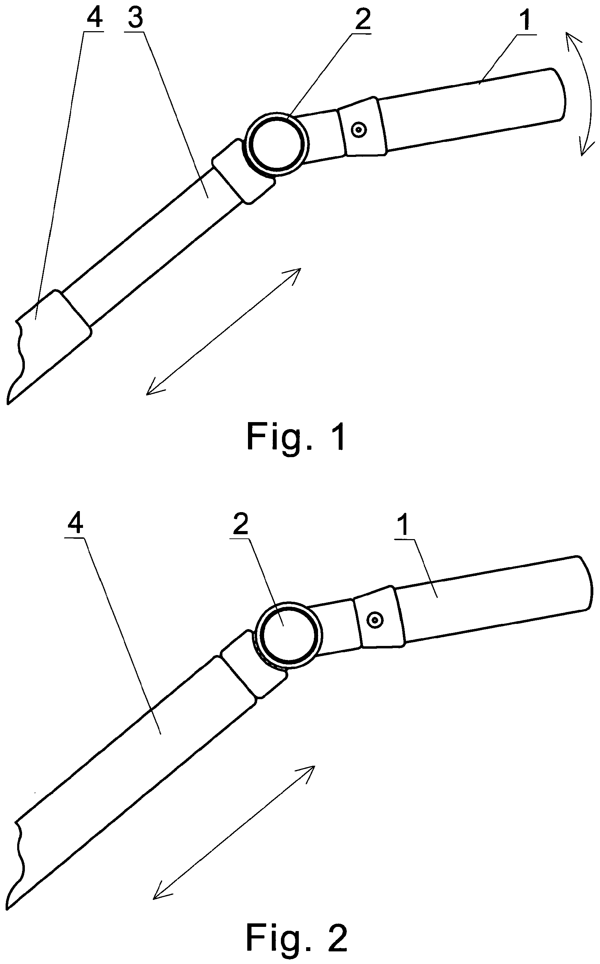

fig. 1 - shows the side view of the adjustable stroller handle with the inner profile extended upwards (extended handle length, and the possibility to shorten it, was marked with an arrow below the drawing) and with the lowered grip (the pendulous adjustment of the grip position and its inclination angle against the ground is marked with the curved arrow in the right-hand side of the drawing),
fig. 2 - shows the side view of the adjustable stroller handle, with the inner profile inserted into the outer one (the possibility to extend the length of the handle and its later shortening is marked with the arrow below the drawing),

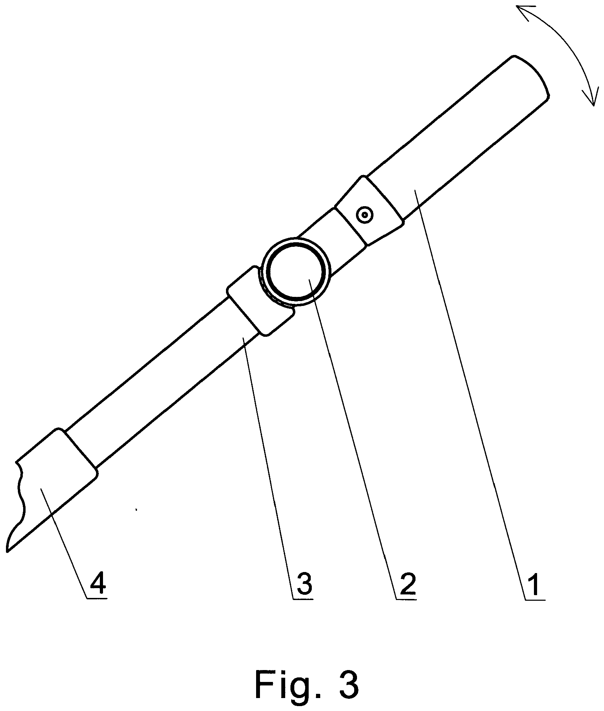

fig. 3 - shows the side view of the adjustable stroller handle with the inner profile pulled out of the outer profile (the possibility of adjusting the swinging of the grip and its inclination angle against the ground is marked with the curved arrow set sideways in the right hand side of the drawing).

The developed adjustable stroller handle basically consists of the grip 1, which is "U" shaped and is situated on the upper end of the stroller frame and constitutes the element which the user holds in his hands in order to push and manouver the stroller.

The grip 1 is usually trimmed with the anti-slip fabric, most commonly with rubber ensuring a secure grasp especially during autumn/winter time, or with the ecoskin which in term is durable, pleasant in touch, and aesthetic in appearance.

Thanks to the fact that the grip 1 ("U"-shaped grip 1) is on its both sides (on each "U" arm) equipped with the projections being the well-known gear adjusting mechanisms 2 (the so-called inclination mechanisms of the folded handle) it is possible to set the grip 1 at the desired angle against the ground. The mechanism works in the well-known way; in the "lock" position the gears of both mechanisms mutually lock each other, and pushing the knobs from outside makes the inner springs squeeze causing the gears de-clutch. It is then possible to choose the inclination of the grip 1 at the desired angle against the ground, by lifting the grip 1 by adequate angle - for instance by 90° up, or by dropping the grip 1 by adequate angle - for instance by 90° down. So, the user may adjust the angle of inclination of the grip 1, for example by - jointly - 180°.

Apart from the possibility to set the angle of inclination of stroller grip 1 against the ground, the possibility is provided to set the length of the stroller handle.

This is possible due to the fact that opposite to the projections being the gear adjustment mechanisms 2, in the elements being the extensions of the side arms of the grip 1 ("U" arms) towards the ground and immovably against the adjustment mechanisms 2, there is, on both sides, likely in each case:
- an inner profile 3 with minor cross-section area which then
- slides inside the outer profile 4
   having the cross-section area bigger than that of the inner profile 3.

The changing of the handle length is done by sliding the inner profile 3 inside the adequately shaped outer profile 4. The above elements - the inner profile 3 and the outer profile 4, constitute jointly a known mechanism called the mechanism of the telescopic handle. By pressing the knob in the telescopic mechanism the user extends the handle by the desired length, and - releasing the knob - locks the handle at its selected height.

By extending the handle the user not only avails to the large scope of height adjustment, but also - the higher the handle is situated the longer becomes the distance between the person pushing the grip 1 and the stroller, and the more space there emerges between user and the stroller for extending his step.

So, the elements of the stroller frame, and strictly: stroller grip 1 (inclined at the angle selected with the use of the gear adjustment mechanism 2) and at the same time adequately extended by adjustment of the depth the inner profile 3 is slid into the outer profile 4, determine the end position of the stroller handle.

Proper setting of the stroller handle allows the user - irrespectively of his height and posture - not to bend down when pushing it, so the situation can be avoided when the handle positioned too low affects the user's spine and the coerced inclined position results in the aching back.

Thus the design described above allows for the full, easy adjustment of the stroller handle, making comfortable the use of the carts, especially strollers, by any user of any size of the body.

### List of elements:

- 1.: grip ("U"-shaped),
- 2.: gear adjustment mechanism,
- 3.: inner profile,
- 4.: outer profile.

## Claims

1. Adjustable stroller handle consisting of a "U" shaped grip, having in both parts being extensions of the grip legs i.e. "U" arms, directed towards the ground, fixed inner profiles, each slidingly set inside the outer profile of the stroller frame, **characterized in that** the grip (1) has on its both legs - on each leg of the grip (1), i.e. on each "U" arm - projections being gear adjusting mechanisms (2), and on the other side of the projections being gear adjusting mechanisms (2), in the parts being the extensions of the grip (1) legs, i.e. of the "U" arms, directed towards the ground, on both sides, likely in each case, there is
an inner profile (3) with minor cross-section area which is inserted into the outer profile (4) with the cross-section bigger than that of the inner profile (3).

2. Adjustable handle according to claim No. 1, **characterized in that** the grip (1) is trimmed with rubber or ecoskin.
